# EUROPÄISCHE PATENTSCHRIFT

(11) **EP 3 038 496 B1**
(45) Veröffentlichungstag und Bekanntmachung des Hinweises auf die Patenterteilung: **06.06.2018**
(21) Anmeldenummer: 14756043.7
(22) Anmeldetag: 27.08.2014
(51) Int. Cl.: A47B 88/49, E05D 11/00, F16C 29/04, F16C 33/30

(54) **BESCHLAG EINES MÖBELS ODER HAUSHALTSGERÄTES UND MÖBEL ODER HAUSHALTSGERÄT**
FIXTURE OF A PIECE OF FURNITURE OR DOMESTIC APPLIANCE AND PIECE OF FURNITURE OR DOMESTIC APPLIANCE
CONSOLE D'UN MEUBLE OU APPAREIL ELECTRIQUE ET MEUBLE OU APPAREIL ELECTRIQUE

(30) Priorität: 28.08.2013 DE 102013109304
(43) Veröffentlichungstag der Anmeldung: 06.07.2016
(73) Patentinhaber: Paul Hettich GmbH & Co. KG, 32278 Kirchlengern (DE)
(72) Erfinder: WEICHELT, Rainer, 32278 Kirchlengern (DE); FRANKE, Thomas, 32257 Bünde (DE)
(74) Vertreter: Specht, Peter
(86) Internationale Anmeldenummer: PCT/EP2014/068149
(87) Internationale Veröffentlichungsnummer: WO 2015/028498

(56) Entgegenhaltungen:
- DE-U1-202010 014 641
- GB-A- 2 497 377
- US-A- 3 722 964

## Beschreibung

Die vorliegende Erfindung betrifft einen Beschlag eines Möbels oder Haushaltsgerätes, insbesondere eines Kühl- oder Geschirrspülgerätes oder Backofens gemäß dem Oberbegriff des Anspruchs 1 sowie ein Möbel oder Haushaltsgerät gemäß dem Oberbegriff der Ansprüche 11 und 12.

Gattungsgemäße Beschläge werden in Möbeln wie Küchen- oder Büromöbeln zur Lagerung bewegbarer Möbelteile wie Schubkästen, Dreh-, Schiebe- oder Falttürsystemen oder Kombinationen daraus eingesetzt. Auch Haushaltsgeräte wie beispielsweise Kühl- oder Geschirrspülgeräte oder auch Backöfen nutzen solche Beschläge zur Lagerung von Schubkästen, heraus fahrbaren Ablageflächen, Geschirrkörben und dergleichen.

Aus der US 3 722 964 A ist ein Beschlag in Gestalt einer Auszugsführung für einen Schubkasten bekannt, bei dem beidseitig des Schubkastens angeordnete Auszugsführungen über ein Seilsystem synchronisiert sind. Ein weiteres relevantes Dokument des Stands der Technik, welches zum Verständnis der Erfindung beiträgt, ist im Folgenden angeführt: - DE 20 2010 014641 U1. Der fortschreitende Komfort in Küchen, Büros und die damit einhergehende Elektrifizierung der beweglichen Möbelteile wie Schubkästen, Dreh-, Schiebe- oder Falttürsystemen und dergleichen dieser Möbel oder Haushaltsgeräte erfolgt dabei üblicherweise durch Anbringen entsprechender zusätzlicher elektrischer Leitungen, wie es beispielsweise aus der GB 2 497 377 A bekannt ist.

Allerdings ist der Aufwand einer solchen zusätzlichen Verkabelung der beweglichen Möbelteile und die somit einhergehenden Material- und Installationskosten relativ groß. Außerdem behindern solche Kabel oftmals den Schließ- und/oder Öffnungsprozess von Schubkastensystemen und Dreh-, Schiebe- oder Falttürsystemen. Durch die sich bewegenden Möbelteile kommt es oft zu einer Zerstörung oder Beschädigung der elektrischen Leitungen.

Aufgabe der vorliegenden Erfindung ist es, einen Beschlag eines Möbels oder Haushaltsgerätes sowie ein Möbel oder Haushaltsgerät bereitzustellen, mit dem eine zuverlässige und kostengünstige Elektrifizierung der beweglichen Möbel- oder Haushaltsgeräteteile ermöglicht ist.

Diese Aufgabe wird durch einen Beschlag eines Möbels oder Haushaltsgerätes mit den Merkmalen des Anspruchs 1 sowie durch ein Möbel oder Haushaltsgerät mit den Merkmalen des Anspruchs 11 und durch ein Möbel oder Haushaltsgerät mit den Merkmalen des Anspruchs 12 gelöst.

Der erfindungsgemäße Beschlag, der mindestens ein mechanisches Übertragungsmittel zur Bewegung von mindestens einem relativ zu einem ersten Beschlagbauteil bewegbaren weiteren Beschlagbauteil und/oder zur Synchronisierung der Bewegung zweier bewegbarer Beschlagbauteile aufweist, wobei das mechanische Übertragungsmittel zusätzlich zur Übertragung elektrischer Energie zwischen einem ersten elektrischen Anschlussbauteil, das am dem ersten Beschlagteil angeordnet ist, und einem zweiten elektrischen Anschlussbauteil, das an dem bewegbaren weiteren Beschlagteil angeordnet ist, eingerichtet ist und über wenigstens eine als elektrisch leitendes Bauteil oder als elektrisch nichtleitendes Bauteil ausgebildete Richtungsumlenkung geführt ist, ist als Auszugsführung mit einer als erstem Beschlagteil ausgebildeten Führungsschiene sowie als weitere Beschlagteile ausgebildeten Laufschiene und die Führungsschiene mit der Laufschiene verbindenden Mittelschiene oder als Schiebetürbeschlag mit einer als erstem Beschlagteil ausgebildeten Laufschiene sowie als weiteren Beschlagteilen ausgebildeten Laufteilen oder als Drehtürbeschlag mit einem als erstem Beschlagteil ausgebildeten Drehzylinder sowie als weiteren Beschlagteilen ausgebildeten Türaufnahmen ausgebildet.

Der erfindungsgemäße Beschlag nutzt also zur Elektrifizierung des bewegbaren Möbel- oder Haushaltsgeräteteils, beispielsweise einem Schubkasten, bereits an dem Beschlag ohnehin vorhandenen Bauteile, nämlich das mechanische Übertragungsmittel, das zur Bewegung oder einer Synchronisierung der Bewegung von bewegbaren Beschlagbauteilen des Beschlags ohnehin genutzt wird und eine Verbindung über den Beschlag vom Möbel- oder Haushaltsgerätekorpus zum bewegbaren Möbel- oder Haushaltsgeräteteil darstellt.

Die Bildung von unterschiedlichen Spannungspotentialen für den erfindungsgemäßen Beschlag ist ermöglicht durch das Zusammenwirken von zwei oder mehr Beschlagbauteilen, kann aber durch geeignete Mittel auch innerhalb nur eines Beschlagbauteils erreicht werden.

Diese Elektrifizierungsidee wird auch mit dem Möbel oder Haushaltsgerät gemäß Anspruch 11 und 12 verwirklicht, da es mindestens zwei relativ zu einem Korpus des Möbels oder Haushaltsgerätes über jeweils mindestens einen Beschlag bewegbar gelagerte Möbel- oder Haushaltsgeräteteile aufweist, wobei jeder der Beschläge ein an einem Korpus festgelegtes erstes Beschlagbauteil und ein an einem Möbel- oder Haushaltsgeräteteil festgelegtes zweites Beschlagbauteil aufweist und das Möbel mindestens ein mechanisches Übertragungsmittel zur Bewegung der am Möbel- oder Haushaltsgeräteteil festgelegten zweiten Beschlagbauteile und/oder zur Synchronisierung der Bewegung der zweiten Beschlagbauteile aufweist, wobei das mechanische Übertragungsmittel zusätzlich zur Übertragung elektrischer Energie zwischen dem ortsfest am Korpus des Möbels oder Haushaltsgerätes festgelegten ersten Bauteil und dem an dem beweg-

Durch die Kopplung des mechanischen Übertragungsmittels einerseits mit den mit dem Korpus verbundenen Beschlagbauteilen und den am bewegbaren Möbel- oder Haushaltsgeräteteil, beispielsweise an zwei Dreh- oder Schiebetüren, festgelegten zweiten Beschlagbauteilen ist auch hier eine Elektrifizierung beider bewegbarer Möbel- oder Haushaltsgeräteteile über das mechanische Übertragungsmittel, das über eines der ortsfest am Korpus des Möbels oder Haushaltsgerätes festgelegten ersten Beschlagbauteile mit elektrischer Energie versorgt wird, ermöglicht.

Die Richtungsumlenkung, beispielsweise in Gestalt eines auf einer Achse drehbargelagerten Rades zur Aufnahme des als Drahtseil ausgebildeten mechanischen Übertragungsmittels ist gemäß einer bevorzugten Ausführungsvariante als nicht-elektrisch leitendes Bauteil ausgebildet, so dass bei Bestromung des mechanischen Übertragungsmittels durch geeignete Materialien oder Mittel eine Bestromung des mit der Richtungsumlenkung verbundenen Möbel- oder Haushaltsgeräteteils verhindert ist. Denkbar ist auch, Richtungsumlenkungen zwei- oder mehrfach in axial gleicher Position anzuordnen, wo sie im Zusammenwirken mit jeweils einem mechanischen Übertragungsmittel die Ausbildung unterschiedlicher elektrischer Leiter oder Signalleitungen mit unterschiedlichen Spannungspotentialen ermöglichen.

Gemäß einer alternativen Ausgestaltung ist die Richtungsumlenkung als elektrisch leitendes Bauteil ausgebildet, um somit eine Stromversorgung des bewegbaren Möbel- oder Haushaltsgeräteteils, an dem die Richtungsumlenkung befestigt ist, zu ermöglichen.

Vorteilhafte Ausführungsvarianten der Erfindung sind Gegenstand der Unteransprüche.

Gemäß einer vorteilhaften Ausführungsvariante des Beschlages ist das mechanische Übertragungsmittel mechanisch fest und elektrisch leitend mit dem ortsfest am Korpus des Möbels oder Haushaltsgerätes festgelegten ersten Beschlagbauteil und dem an dem bewegbaren Möbel- oder Haushaltsgeräteteil festgelegten bewegbaren weiteren Beschlagbauteil verbunden.

Dadurch ist ermöglicht, elektrische Energie über eine am Korpus entlang geführte elektrische Leitung zum ersten Beschlagbauteil zu führen, wo sie über ein Anschlussstück des mechanischen Übertragungsmittels, beispielsweise in Gestalt eines Drahtseils zur Synchronisierung der Bewegung einer Mittelschiene und einer Laufschiene eines als Auszugsführung ausgebildeten Beschlags in die an dem bewegbaren Möbel- oder Haushaltsgeräteteil, beispielsweise eines Schubkastens, festgelegten bewegbaren weiteren Beschlagbauteils, hier einer Laufschiene, weitergeleitet wird und über ein Kontaktelement von der Festlegungsstelle des mechanischen Übertragungsmittels an der Laufschiene in das bewegbare Möbel- oder Haushaltsgeräteteil transportiert werden kann.

Das beispielsweise als Drahtseil mit Stahlseele und einer Kupferummantelung ausgebildete mechanische Übertragungsmittel kann dabei gestreckt zwischen dem bewegbaren Beschlagbauteil oder über eine Richtungsumlenkung angeordnet sein.

Das mechanische Übertragungsmittel kann gemäß einer bevorzugten Ausführungsvariante sowohl als Zugmittel betriebene mit offenem oder geschlossenem Zugmittel ausgebildet sein. So kann beispielsweise das als Drahtseil ausgebildete mechanische Übertragungsmittel als auf Richtungsumlenkungen aufgespannter Ring ausgebildet sein oder als Strang, der einerseits am ersten ortsfest am Korpus befestigen Beschlagbauteil und mit seinem anderen Ende an dem Beschlagbauteil festgelegt sein, das mit dem bewegbaren Möbel- oder Haushaltsgeräteteil verbunden ist.

Zur Übertragung elektrischer Energie kann gemäß weiterer Ausführungsvarianten an das mechanische Übertragungsmittel sowohl eine Gleichspannungsquelle als auch alternativ eine Wechselspannungsquelle angeschlossen sein.

Nachfolgend werden bevorzugte Ausführungsbeispiele anhand der beiliegenden Zeichnungen näher erläutert. Es zeigen:
- Figur 1: eine perspektivische Ansicht eines Ausschnitts eines Möbels oder Haushaltsgerätes mit einem an einem Korpus festgelegten Beschlag in Gestalt einer Auszugsführung mit Synchronführung,
- Figuren 2 und 3: perspektivische Darstellungen des Beschlages aus Figur 1 in unterschiedlichen Auszugspositionen,
- Figur 4: eine perspektivische Ansicht eines Ausschnittes des Beschlages aus Figur 2 zur Darstellung der Anbindung des mechanischen Übertragungsmittels an ein Beschlagbauteil,
- Figuren 5 bis 7: perspektivische Darstellungen einer alternativen Ausführungsvariante des Beschlages mit stromisolierten Kontaktelementen und
- Figur 8a: eine Prinzipdarstellung der elektrischen Anbindung der spannungsführenden Teile aus den Figuren 5 bis 7,
- Figur 8b: eine Detailansicht der elektrischen Anbindung der spannungsführenden Teile aus den Figuren 5 bis 7,
- Figuren 9 bis 11: eine nochmals weitere Ausführungsvariante eines Beschlages bei getrennten Mechanisches Übertragungsmittelen,
- Figur 12a: eine Prinzipdarstellung der elektrischen Anbindung der spannungsführenden Teile aus den Figuren 9 bis 11,
- Figur 12b: eine Detailansicht der elektrischen Anbindung der spannungsführenden Teile aus den Figuren 9 bis 11,
- Figur 13: eine perspektivische Ansicht einer weiteren Ausführungsvariante eines Möbels mit synchronbewegbaren Drehtüren,
- Figuren 14 und 15: Frontansichten des Drehtürmöbels aus Figur 13 in der Schließstellung bzw. der Öffnungsstellung der Drehtüren,
- Figuren 16 und 17: jeweilige Draufsichten auf die Drehtüren und die Drehtürbeschläge im Öffnungszustand bzw. geschlossenem Zustand der Drehtüren,
- Figur 18: eine perspektivische Darstellung eines Drehtürbeschlages mit daran angebrachten mechanischen Übertragungsmitteln und Kontaktelementen zur Übertragung elektrischer Energie auf die mechanischen Übertragungsmittel,
- Figur 19: eine perspektivische Darstellung einer weiteren Ausführungsvariante einer linken Auszugsführung und einer damit gekoppelten und synchronisierten rechten Auszugsführung,
- Figur 20: eine perspektivische Darstellung einer weiteren Ausführungsvariante einer synchronisierten Schiebetüranordnung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Beschlags, Beschlagbauteils, mechanischen Übertragungsmittels, Kontaktelements und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

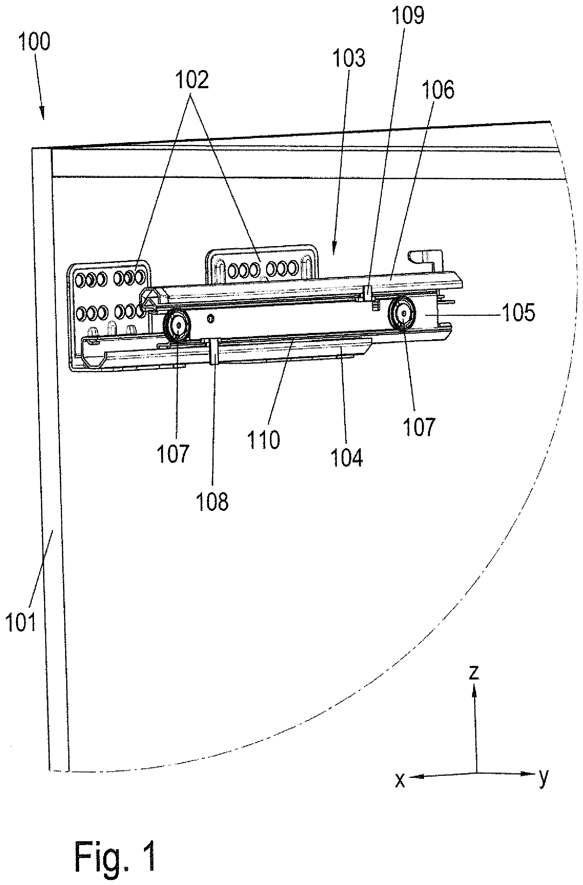

In Figur 1 ist mit dem Bezugszeichen 100 insgesamt ein Ausschnitt eines Möbels oder Haushaltsgerätes bezeichnet. An einem Korpus 101 des Möbels oder Haushaltsgerätes 100 ist ein Beschlag 103 mit den Befestigungselementen 102 montiert.

Der Beschlag ist hier als Auszugsführung zur verschiebbaren Montage eines Schubkastens oder eines Geschirrkorbes oder dergleichen ausgebildet, mit einem ersten als Korpusschiene ausgebildeten Beschlagbauteil 104, das an den Befestigungselementen 102 festgelegt ist, einem in dem ersten Beschlagbauteil 104 verschiebbar geführten als Mittelschiene ausgebildeten weiteren Beschlagbauteil 105 sowie einem weiteren Beschlagbauteil 106, das in der Ausgestaltung des Beschlages 103 als Auszugsführung als Laufschiene ausgebildet ist, an der das bewegliche Möbelteil, beispielsweise ein Schubkasten, über eine Seitenzarge des Schubkastens befestigt ist.

Im Falle eines als bewegliches Möbel- oder Haushaltsgeräteteil ausgebildeten Schubkastens ist üblicherweise an der hier nicht gezeigten gegenüberliegenden Korpusseite des Möbels 100 ein weiterer solcher Beschlag befestigt, so dass der Schubkasten beidseitig im Korpus 101 des Möbels oder Haushaltsgerätes 100 verschiebbar über den als Auszugsführung ausgebildeten Beschlag 103 bewegbar geführt ist.

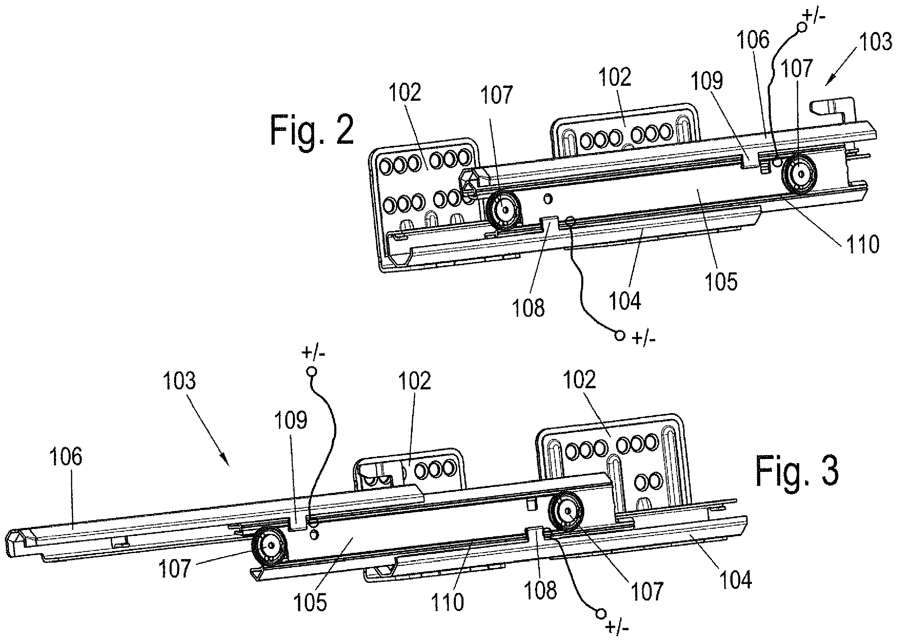

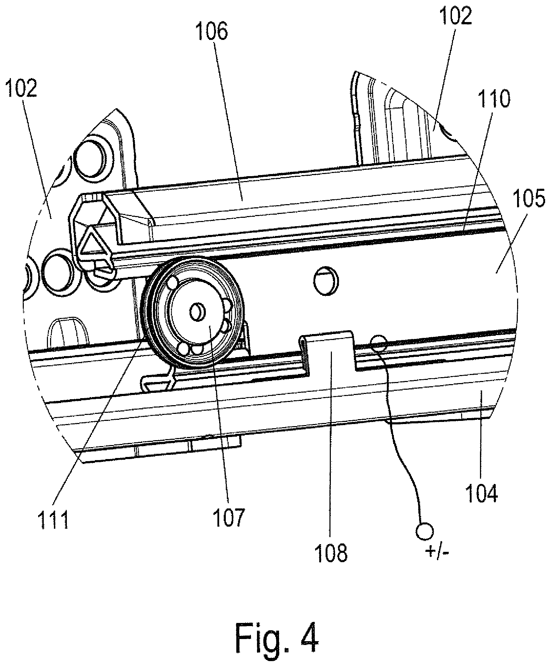

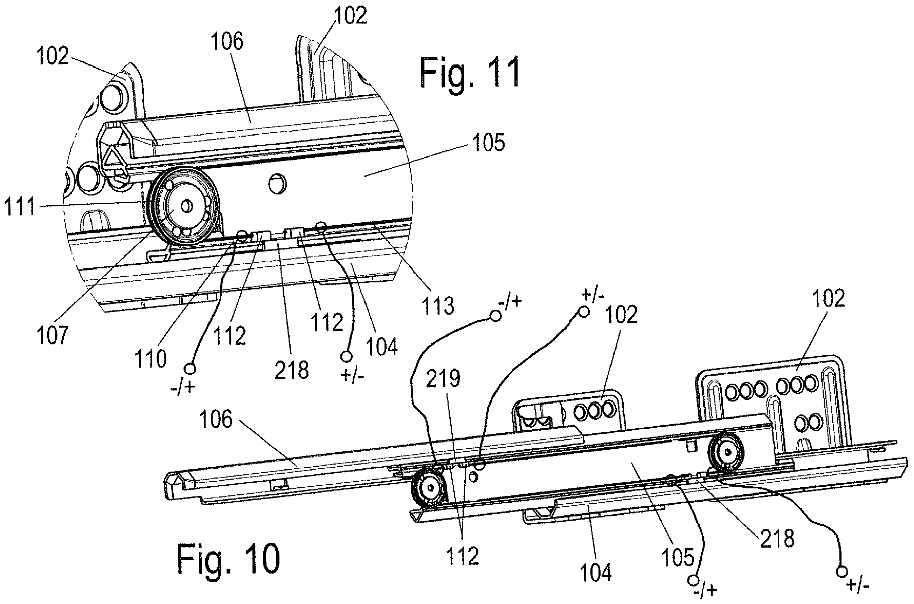

Im Folgenden wird auch unter Bezugnahme auf die weiteren Figuren 2 bis 10 die Erfindung anhand eines Schubkastenmöbels mit aus diesem ausziehbaren Schubkasten weiter erläutert. In entsprechender Weise ist es jedoch ebenso denkbar, die Erfindung für einen Beschlag anderer Gattung, beispielsweise als einen Schiebetürenbeschlag mit einer an einem ersten Möbelteil, beispielsweise einem Möbelkorpus, verbindende Schiene und darin beweglich geführtem weiteren Beschlagteil, das mit der Schiebetür verbunden ist, zu betrachten und den erfindungsgemäßen Gedanken auf einen solchen Beschlag zu übertragen.

Wie in der Figur 1 des Weiteren erkennbar ist, sind an dem als Mittelschiene ausgebildeten weiteren Beschlagteil 105 an den Richtungsumlenkungen 107 in Gestalt von auf senkrecht zur Auszugsrichtung X ausgerichteten Achsen drehbare Radelemente angebracht, auf denen in einer Ausführungsvariante ein mechanisches Übertragungsmittel 110, hier in Gestalt eines ringförmigen, geschlossenen Drahtseils, gelagert ist, das mechanisch zur Synchronisierung der Auszugsbewegung der bewegbaren Beschlagbauteile 105 und 106, hier der Mittel- und der Laufschiene dient. Die Verbindung zwischen dem mechanischen Übertragungsmittel 110 und dem ersten am Möbelkorpus 101 festgelegten Beschlagbauteil 104 sowie an dem (nicht gezeigten) beweglichen Möbel- oder Haushaltsgerätebauteil festgelegten weiteren Beschlagbauteil 106 erfolgt dabei über Kontaktelemente 108, 109, so dass mit der Bewegung entgegen der Auszugsrichtung X des Beschlagbauteils 106 stets eine Bewegung des weiteren bewegbaren Beschlagbauteils 105 einhergeht.

Das mechanische Übertragungsmittel 110 ist in der hier gezeigten Ausführungsvariante als Stahlseil ausgebildet, bevorzugt als Stahlseil mit einem Stahlkern und einer Ummantelung aus einem leitfähigeren Metall, wie beispielsweise Kupfer oder Aluminium oder beispielsweise auch einem Seil mit einer Kunststoffseele, die mit einer galvanischen Beschichtung versehen ist, so dass das mechanische Übertragungsmittel 110 zur Übertragung elektrischer Energie zwischen dem ortsfest am Korpus 101 des Möbels oder Haushaltsgerätes 100 festgelegten ersten Beschlagbauteil 104 und dem an dem bewegbaren Möbel- oder Haushaltsgeräteteil festgelegten bewegbaren weiteren Beschlagbauteil 106 eingerichtet ist, so dass über das mechanische Übertragungsmittel 110 durch Einspeisung elektrischer Energie über eine am Möbelkorpus 101 festgelegte und an das Kontaktelement 108 angeschlossene Stromleitung die eingespeiste elektrische Energie über das mechanische Übertragungsmittel 110 zu dem zweiten Kontaktelement 109 führbar und dort abgreifbar ist, um einem in dem bewegbaren Möbelteil vorhandenen Stromverbraucher die notwendige Energie zuführen zu können.

Als Stromquelle dient dabei vorzugsweise eine SELV-Stromquelle, denkbar ist aber auch jede andere Stromquelle, wie beispielsweise ein Akkumulator oder auch eine Wechselstromquelle, so dass nach dem Aufsetzen beispielsweise eines Schubkastens auf die als Laufschiene ausgebildeten weiteren Beschlagbauteile 106 beidseits des Schubkastens seitliche metallisch ausgeführte Schubkastenzargen elektrisch mit der Stromquelle über die beidseits angeordneten Mechanisches Übertragungsmittel 110 verbunden sind, so dass beispielsweise im Fall einer Gleichspannungsquelle ein Pol der Spannungsquelle mit einer linken und der andere Pol mit einer rechten Zarge des Schubkastens in Verbindung stehen und so ein Abgriff der eingespeisten Spannung an dieser Stelle innerhalb als auch außerhalb des bewegbaren Möbelteils ermöglicht ist.

In den in den Figuren 1 bis 11 gezeigten Ausführungsvarianten des Beschlages ist das mechanische Übertragungsmittel 110, 113 über jeweilige Richtungsumlenkungen 107 geführt, denkbar ist aber auch, das mechanische Übertragungsmittel 110, 113 gestreckt zwischen den Beschlagbauteilen 104, 106 anzuordnen.

Vorzugsweise erfolgt die Bildung eines Spannungspotentials zwischen dem linken und rechten Beschlag oder auch innerhalb eines Beschlags durch das Zuführen und Abführen des Stromes nur an das mechanische Übertragungsmittel 110, 113, indem nachfolgend genauer erläuterte isolierende Mittel eine Bestromung der Beschlagbauteile verhindern. Ohne diese isolierenden Mittel und/oder indem die Richtungsumlenkung 107 ebenfalls als elektrisch leitendes Bauteil ausgebildet ist, können gegebenenfalls die Beschlagbauteile 104, 105, 106 ebenfalls mit Strom versorgt werden.

Als mechanisches Übertragungsmittel kommen dabei beispielsweise Zugmittelgetriebe mit offenen oder geschlossenen Zugmitteln in Frage. Bei den in den Figuren 1 bis 12 gezeigten Ausführungsvarianten ist die als Drahtseil ausgebildete Zug- oder Druckmitteleinheit 110 als geschlossener Drahtring ausgebildet.

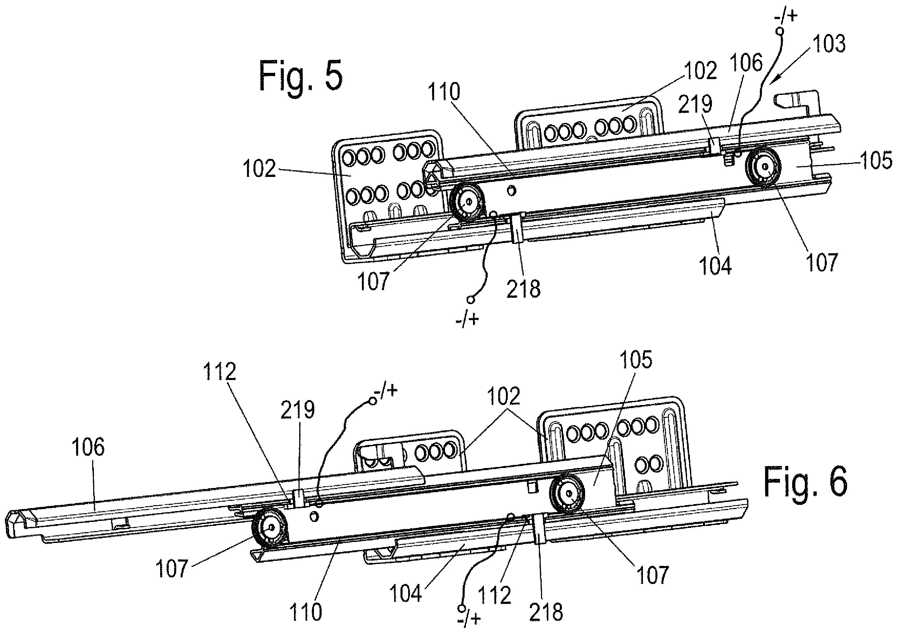

In der in den Figuren 5 bis 8 gezeigten Anordnung sind Halter 218, 219 ohne elektrische Funktion in Form von separaten Zungen aus metallischem Werkstoff an den jeweiligen Beschlagbauteilen 104, 106 durch geeignete Verbindungsverfahren, wie beispielsweise Verschweißen oder Verkleben, festgelegt. Denkbar ist auch eine einstückige Ausbildung der Halter 218, 219 mit den jeweiligen Beschlagbauteilen 104, 106. Isolierstücke 112 zwischen den Haltern 218, 219 und des elektrisch leitenden Übertragungsmittels 110 verhindern eine Bestromung der Beschlagbauteile 104, 106. Für die Bestromung der Zug- oder Druckmitteleinheit 110 können hierfür zum Beispiel isolierte stromleitende Adern 220 unmittelbar im Bereich der Halter 218, 219 festgelegt sein.

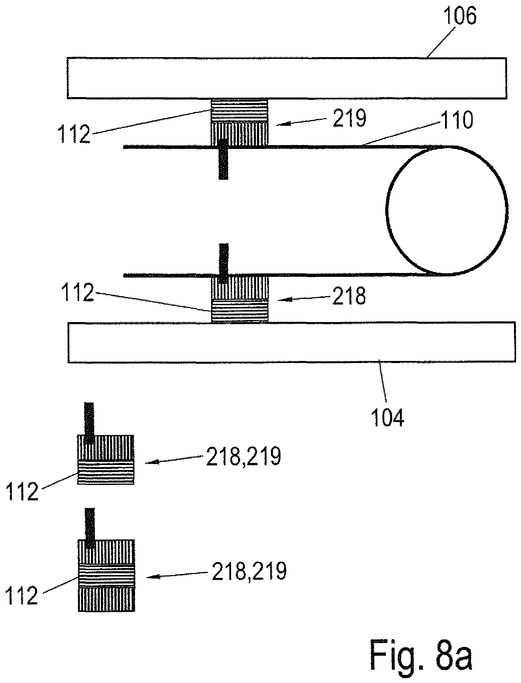

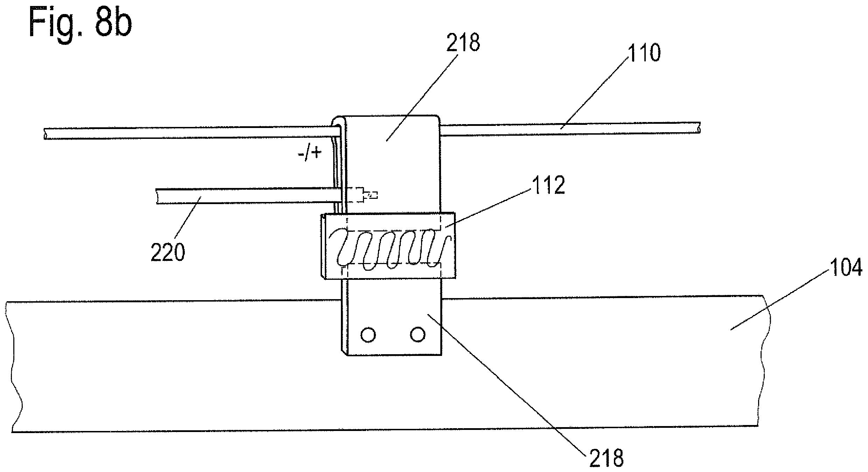

Figur 8a zeigt in einer Prinzipdarstellung eine bevorzugte Anordnung eines solchen Systems, Figur 8b eine konkrete Ausführungsvariante desselben, mit einem zweiteilig ausgebildeten Halter 218, 219, wobei die beiden Teile des Halters 218 mittels eines daran festgelegtem Isolierstücks 112 voneinander getrennt sind, so dass das an dem Beschlagbauteil 104, 106 festgelegte Teil unbestromt ist, währenddessen das an dem mechanischen Übertragungsmittel 110 angeordnete Teil mittels einer isolierten, stromleitenden Ader 220 den Strom an das mechanische Übertragungsmittel 110 weiterleiten kann. Ein Umspritzen der beiden Teile des Halters 218, 219 ist die bevorzugte Form der Anbindung des Isolierstücks 112 an die beiden Teile des Halters 218, 219.

Alternativ können die Halter 218, 219 anstatt aus metallischem Werkstoff aus einem isolierendem Werkstoff in Form von separaten Zungen ausgebildet und mittels geeigneten Verbindungsverfahren, wie beispielsweise Verschrauben oder Verkleben, an den jeweiligen Beschlagbauteilen 104, 106 festgelegt sein. Wie zuvor dient ein an das mechanische Übertragungsmittel, beispielsweise eine durch Vercrimpen, festgelegte, isolierte und stromleitende Ader 220 im Bereich der Halter 218, 219 als Bestromungsmittel. Auch hiermit ist eine Bestromung der Beschlagbauteile 104, 106 wirkungsvoll unterbunden.

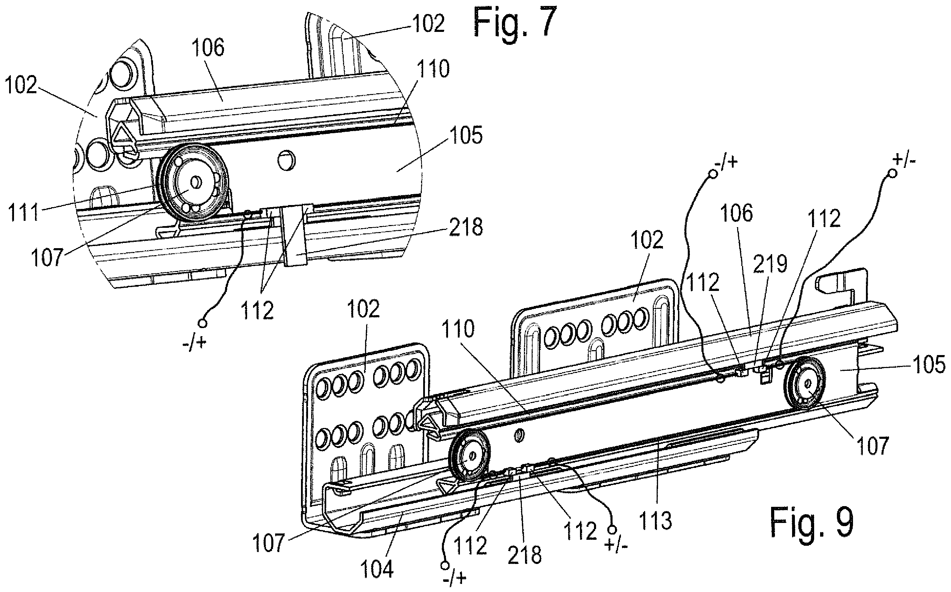

Denkbar ist aber auch die Ausbildung als offenes Zugmittel, wie es in den Figuren 9 bis 12 gezeigt ist, bei dem das mechanische Übertragungsmittel 110, 113 in Gestalt einzelner Drahtstränge ausgebildet ist, die über jeweilige Richtungsumlenkungen 107 geführt sind und an ihren jeweiligen Enden über Isolierstücke 112 und Halter 218, 219 des ersten Beschlagbauteils 104 bzw. des weiteren Beschlagbauteils 106 festgelegt sind.

Wie in den Figuren 9 bis 12 des Weiteren gezeigt ist, sind die Enden des mechanischen Übertragungsmittels 110, 113 jeweils in Isolierstücke 112 eingefasst, so dass die jeweiligen Beschlagbauteile 104, 106 während des elektrischen Betriebs eines Verbrauchers im beweglichen Bauteil nicht selbst bestromt werden, sondern die Weiterleitung der elektrischen Energie auf die Enden des mechanischen Übertragungsmittels 110, 113 über dazu vorgesehene Anschlusselemente im zusammen mit dem Beschlagbauteil 106 bewegbaren beweglichen Möbel- oder Haushaltsgeräteteil vorgesehenen Kontakten erfolgt. Hiermit lassen sich innerhalb eines Beschlages 103 mehrere bzw. unterschiedliche Pole, hier mit + und - dargestellt, ausbilden.

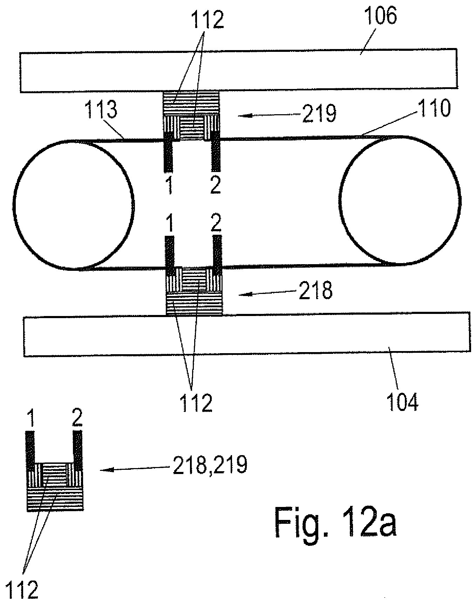

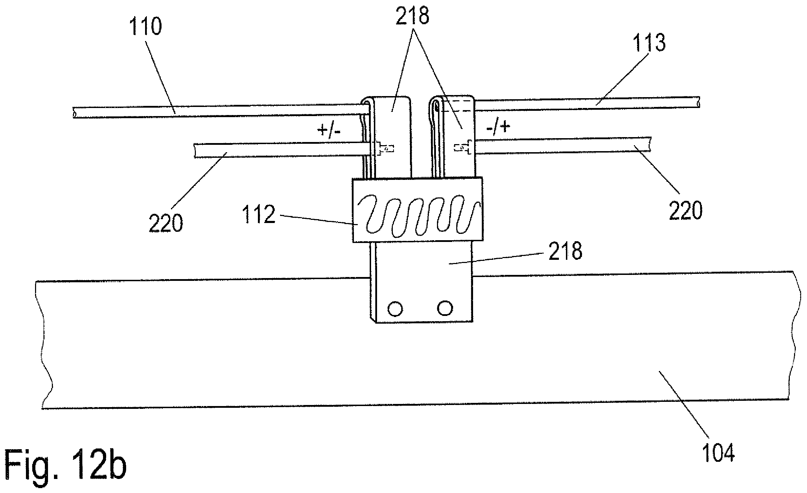

Figur 12a zeigt in einer Prinzipdarstellung eine bevorzugte Anordnung eines solchen Systems, Figur 12b eine konkrete Ausführungsvariante desselben, mit einem dreiteilig ausgebildeten Halter 218, 219, wobei die drei Teile des Halters 218 mittels daran festgelegtem Isolierstück 112 voneinander getrennt sind, so dass das an dem Beschlagbauteil 104, 106 festgelegte Teil unbestromt ist, währenddessen die an das mechanische Übertragungsmittel 110, 113 angeordneten Teile mittels isolierter, stromleitender Adern 220 den Strom an das mechanische Übertragungsmittel 110, 113 weiterleiten können.

Bei der in den Figuren 2 bis 4 gezeigten Ausführungsvariante sind Kontaktelemente 108, 109 am ersten Beschlagbauteil 104 und dem weiteren Beschlagbauteil 106 als aus dem Material der Beschlagbauteile 104, 106 heraus gebogene Zungen ausgebildet, die das zur Leitung elektrischer Energie genutzte Stahlseil festklemmen, ohne das Beschlagbauteil 104, 106 elektrisch zu isolieren, was beispielsweise im Falle von SELV-Stromquellen durchaus möglich ist. Anstatt einstückig mit den Beschlagbauteilen 104, 106 ausgebildet zu sein, können die Kontaktelemente 108, 109 separate Bauteile sein, die mittels eines geeigneten Verbindungsverfahrens, beispielsweise Verschweißen, an den Beschlagbauteilen 104, 106 festgelegt sind.

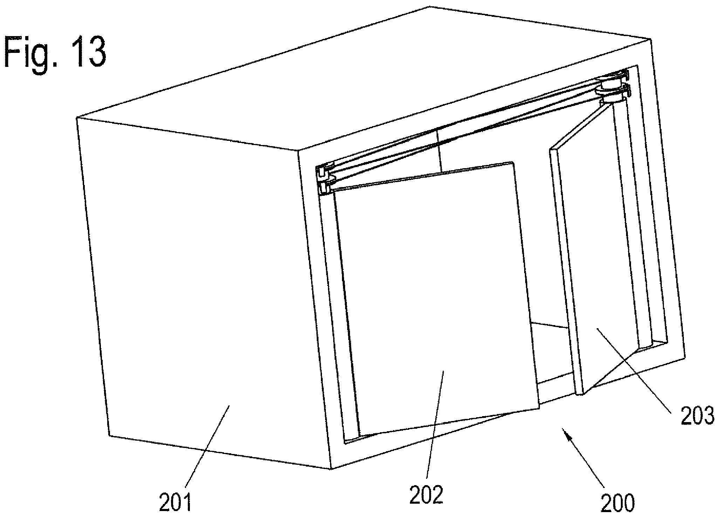

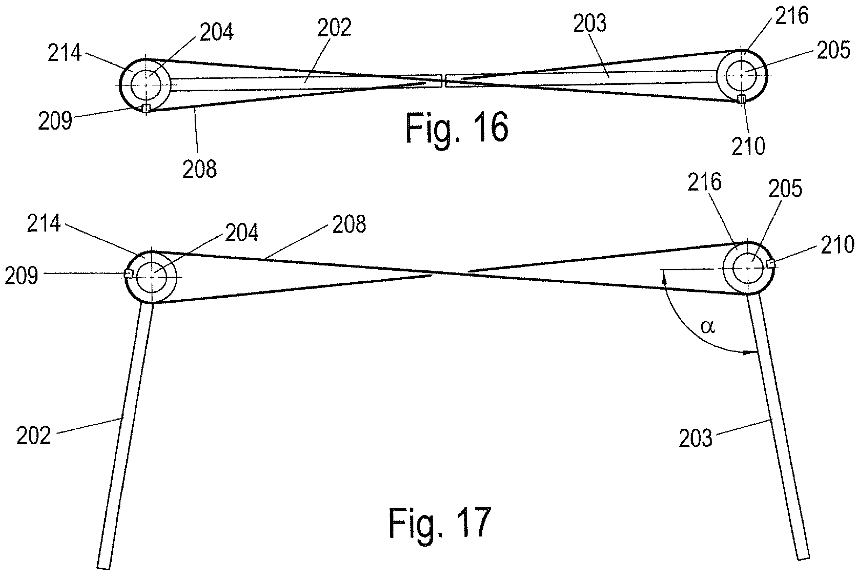

In den Figuren 13 bis 18 ist mit dem Bezugszeichen 200 ein weiteres Möbel oder Haushaltsgerät bezeichnet, hier in Gestalt eines Drehtürmöbels mit zwei einen Korpus 201 verschließenden Drehtüren 202, 203 als bewegbare Möbel- oder Haushaltsgeräteteile, die über jeweilige Drehtürbeschläge am Möbelkorpus festgelegt sind. An einem gegenüber dem Möbelkorpus 201 drehbar bewegbaren Beschlagbauteil 204, hier in Gestalt eines drehbar gelagerten Drehzylinders, sind die jeweiligen Drehtüren 202, 203 über an den Beschlagbauteilen 204, 205 festgelegte Türaufnahmen 206, 207 festgelegt.

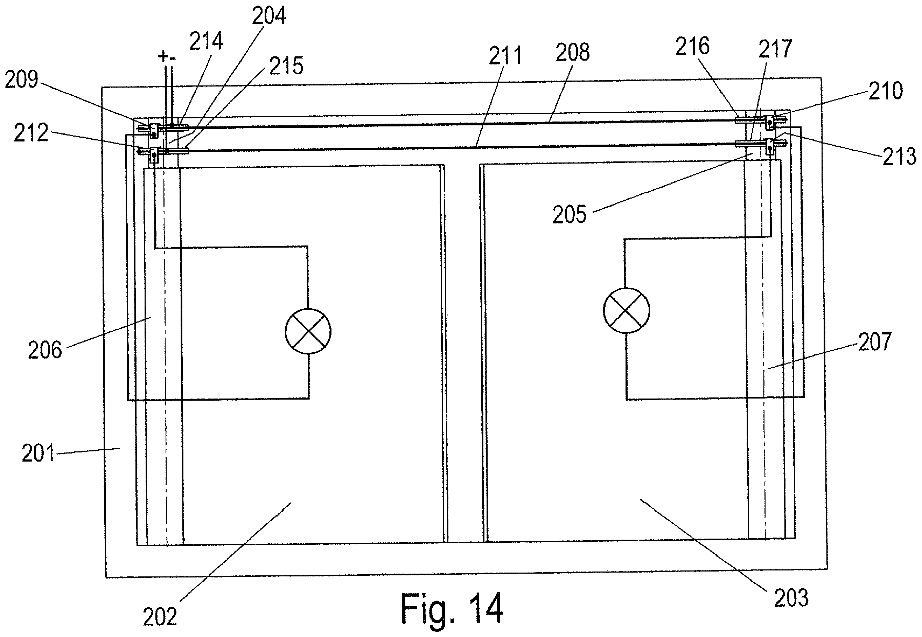

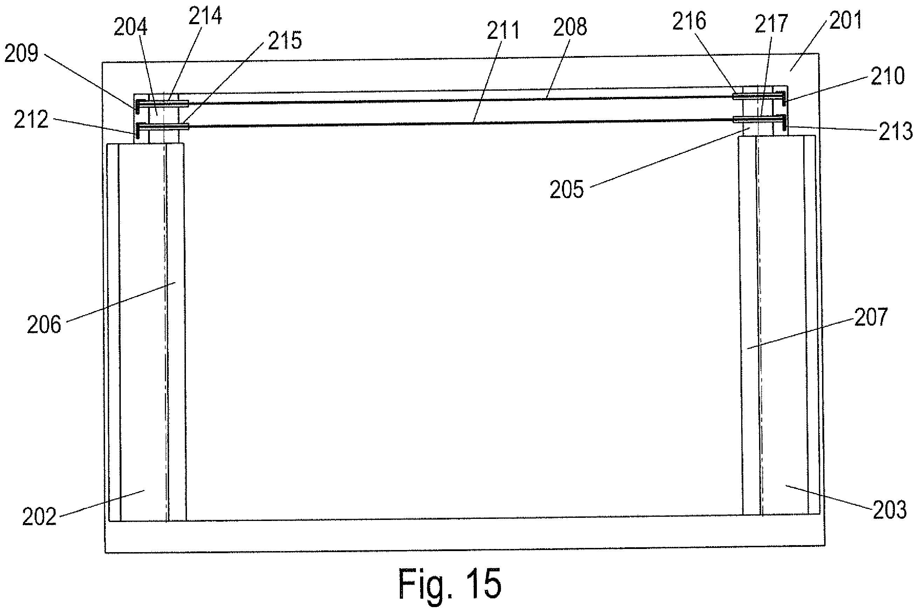

An den Beschlagbauteilen 204, 205 sind zur Synchronisierung der Bewegung der Drehtüren 202, 203 mechanische Übertragungsmittel 208, 211 in Gestalt von Zugseilen festgelegt, die über jeweilige Richtungsumlenkungen 214, 215, 216, 217 geführt sind, die ihrerseits fest mit den Beschlagbauteilen 204, 205 verbunden sind, so dass bei Betätigung einer der Drehtüren 202, 203 die weitere Drehtür 203, 202 um einen entsprechenden Winkel α in entgegengesetzter Drehrichtung mit bewegt wird, wie es in den Figuren 14 und 15 gezeigt ist.

Die Übertragung elektrischer Energie erfolgt hier über Kontaktelemente 209, 210, 212, 213, die die mechanischen Übertragungsmittel 208, 211 mit den Beschlagbauteilen 204, 205 verbinden, so dass bei Einspeisung elektrischer Energie über das in Figur 12 linke Beschlagbauteil 204 gleichzeitig eine Energieversorgung der in Figur 12 rechten Drehtür 203 ermöglicht ist.

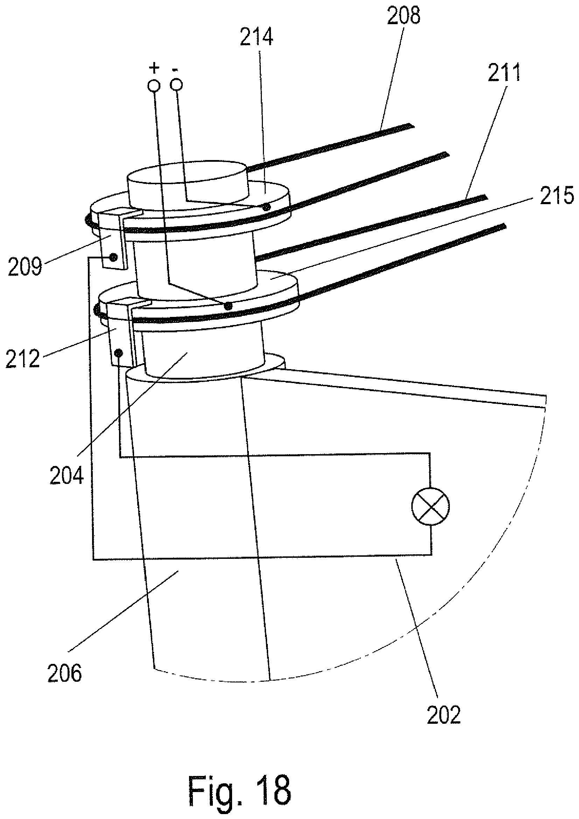

Figur 18 zeigt noch einmal in einer Detaildarstellung die Anbindung der auch hier vorzugsweise als Stahlseil ausgebildeten mechanischen Übertragungsmittel 208, 211 über die Kontaktelemente 209, 212 an das erste Beschlagbauteil 204, um eine an diese Drehtür 202 angeschlossene elektrische Energiequelle auch für die weitere Drehtür 203 nutzbar zu machen.

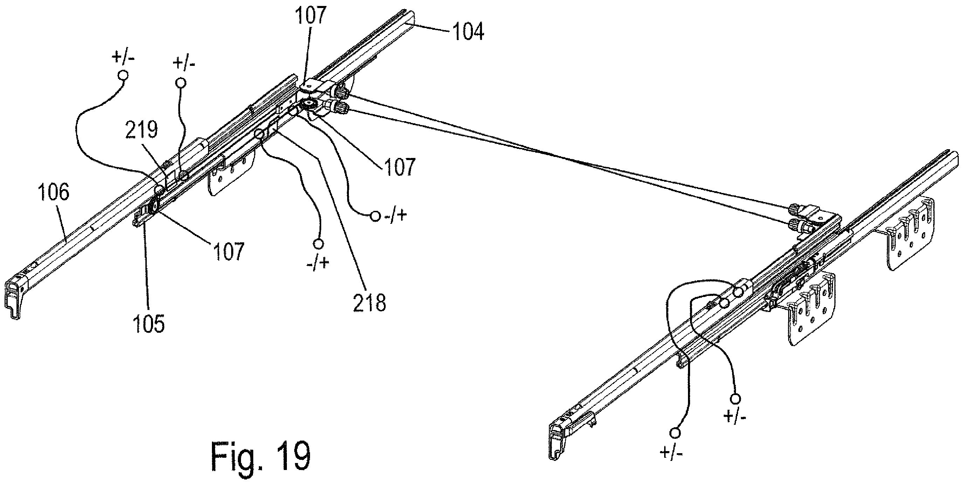

In Figur 19 ist eine weitere Ausführungsvariante einer beidseitigen Auszugsführung mit Synchronführung gezeigt. Hierbei gewährleistet ein über Richtungsumlenkungen 107 geführtes, zweiteiliges mechanisches Übertragungsmittel die synchrone Parallelverstellung einer linken und einer rechten Auszugsführung. Über eine elektrische Zuleitung in das mechanische Übertragungsmittel nur einer Auszugsführung in dem Bereich des Halters 218 wird hiermit ermöglicht, den Strom im Bereich des Halters 219 in der linken und der rechten Auszugsführung abzugreifen. Somit lassen sich über nur eine elektrische Versorgungszuleitung die linke und die rechte Auszugsführung mit Strom versorgen.

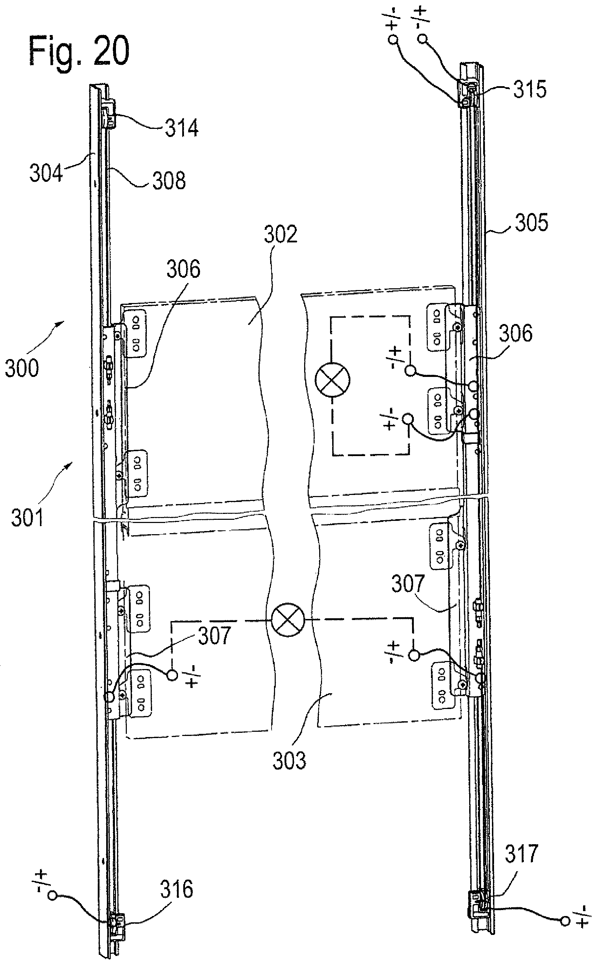

Figur 20 zeigt eine Ausführungsvariante einer Schiebetüranwendung., in der sich zwei Schiebetüren 302, 303 gegenläufig zueinander bewegen, das heißt beim Bewegen einer Schiebetür 302, 303 in Öffnungsrichtung bewegen sich beide Schiebetüren 302, 303 voneinander weg, beim Bewegen einer Schiebetür 302, 303 in Schließrichtung bewegen sich beide Schiebetüren 302, 303 aufeinander zu. Diese synchronisierte Bewegung erfolgt durch an den Schiebetüren 302, 303 als Laufteil ausgebildete Beschlagbauteile 306, 307, die in Schienenelementen 304, 305 geführt sind. Die gegenläufige Bewegung beider Schiebetüren 302, 303 wird über ein elektrisch leitendes Übertragungsmittel 308, 311 sowie Richtungsumlenkungen 314, 315, 316, 317 gesteuert und synchronisiert.

Eine schaltungstechnisch mögliche Anwendung zeigt hierbei die untere Darstellung der Figur 20, indem an Richtungsumlenkungen 316, 317 aus metallisch leitendem Material beispielsweise als Schleifkontakt ausgebildete Kontaktstellen für die Spannungszuführung angeordnet sind. Über diese Schleifkontakte erfolgt die Spannungsübertragung auf die Richtungsumlenkungen 316, 317, in diesem Beispiel als Rollen ausgeführt. Die mit genügend Andruckkraft an die Rollen 316, 317 befestigten elektrisch leitenden Übertragungsmittel 308, 311 sind somit ebenfalls mit elektrischer Spannung verbunden. An den Laufteilen 306, 307 kann einerseits die Spannung unmittelbar an dem elektrisch leitenden Übertragungsmittel 308, 311 abgegriffen werden, andererseits an einem beliebigen Punkt an den Laufteilen 306, 307 selbst, wenn keine Isolationselemente eingebaut sind.

Eine weitere schaltungstechnisch mögliche Anwendung zeigt die obere Darstellung der Figur 20. Hier sind zwei oder mehrere Richtungsumlenkungen in axialer Richtung angeordnet, auf denen jeweils ein elektrisch leitendes Übertragungsmittel geführt wird. Durch elektrische Isolation der voneinander beabstandeten Richtungsumlenkungen lassen sich unterschiedlich zueinander polarisierte elektrische Spannungen fortleiten.

Neben den Ausgestaltungen der biegeflexiblen mechanischen Übertragungsmittel als Drahtseil ist es ebenso denkbar, diese beispielsweise in Form eines Bowdenzuges oder als mehradriges Kabel auszubilden.

Denkbar ist ebenso bei einer durch zwei Leiter hergestellten Verbindung, welche vorzugsweise über Akkumulatoren oder Kondensatoren gespeist wird, bei einer kurzzeitigen Unterbrechung der Ladespannung der Bauteile in der so entstandenen Pause beispielsweise ein Datenpaket in digitaler Form aus dem beweglichen Möbelteil heraus in den Möbelkorpus zurück zu übertragen, bevor die Ladespannung wieder angeregt wird. Weiter ist es denkbar, eine Wechselspannung zu übertragen, die im beweglichen Möbelteil die mit positivem Vorzeichen ankommenden Spannungsanteile für einen ersten vorbestimmten Zweck und die mit negativen Spannungsanteil ankommende Spannungsanteil für einen zweiten weiteren Zweck zu nutzen.

### Bezugszeichenliste

- 100: Möbel oder Haushaltsgerät
- 101: Korpus
- 102: Befestigungselement
- 103: Beschlag (Auszugsführung)
- 104: Beschlagbauteil (Führungsschiene)
- 105: Beschlagbauteil (Mittelschiene)
- 106: Beschlagbauteil (Laufschiene)
- 107: Richtungsumlenkung
- 108: Kontaktelement
- 109: Kontaktelement
- 110: mechanisches Übertragungsmittel
- 112: Isolierstück
- 113: mechanisches Übertragungsmittel

- 200: Möbel oder Haushaltsgerät
- 201: Korpus
- 202, 203: Drehtür
- 204: Beschlagbauteil (Drehzylinder)
- 205: Beschlagbauteil (Drehzylinder)
- 206, 207: Beschlagbauteil (Türaufnahme)
- 208: mechanisches Übertragungsmittel
- 209, 210: Kontaktelement
- 211: mechanisches Übertragungsmittel
- 212, 213: Kontaktelement
- 214 bis 217: Richtungsumlenkung
- 218, 219: Halter
- 220: Stromleitende Ader
- 302, 303: Schiebetür
- 304, 305: Beschlagbauteil (Schienenelement)
- 306: Beschlagbauteil (Laufteil)
- 307: Beschlagbauteil (Laufteil)
- 308: mechanisches Übertragungsmittel
- 311: mechanisches Übertragungsmittel

- X: Auszugsrichtung
- α: Winkel
- -, +: Spannungspotential

## Patentansprüche

1. Beschlag (103) eines Möbels (100) oder Haushaltsgerätes, insbesondere eines Kühl- oder Geschirrspülgerätes oder Backofens, zur Verbindung zweier relativ zueinander bewegbaren Möbel- oder Haushaltsgeräteteile, aufweisend ein erstes Beschlagteil (104) und wenigstens ein bewegbares weiteres Beschlagteil (105, 106) sowie mindestens ein zumindest teilweise aus einem elektrisch leitenden Material bestehendes mechanisches Übertragungsmittel (110, 113) zur Bewegung des mindestens einen relativ zu dem ersten Beschlagteil (104) bewegbaren weiteren Beschlagteils (105, 106) und/oder zur Synchronisierung der Bewegung zweier bewegbarer Beschlagteile (105, 106), wobei an dem ersten Beschlagteil (104) ein erstes elektrisches Anschlussbauteil (108) und an dem bewegbaren weiteren Beschlagteil (105, 106) ein zweites elektrischen Anschlussbauteil (109) angeordnet ist, wobei das mechanische Übertragungsmittel (110, 113) zusätzlich zur Übertragung elektrischer Energie zwischen dem ersten elektrischen Anschlussbauteil (108) und dem zweiten elektrischen Anschlussbauteil (109) eingerichtet ist und über wenigstens eine als elektrisch leitendes Bauteil oder als elektrisch nichtleitendes Bauteil ausgebildete Richtungsumlenkung (107) geführt ist, **dadurch gekennzeichnet, dass** der Beschlag als Auszugsführung mit einer als erstem Beschlagteil (104) ausgebildeten Führungsschiene sowie als weitere Beschlagteile (105, 106) ausgebildeten Laufschiene und die Führungsschiene mit der Laufschiene verbindenden Mittelschiene oder dass der Beschlag als Schiebetürbeschlag mit einer als erstem Beschlagteil (304, 305) ausgebildeten Laufschiene sowie als weiteren Beschlagteilen (306, 307) ausgebildeten Laufteilen oder dass der Beschlag als Drehtürbeschlag mit einem als erstem Beschlagteil (204, 205) ausgebildeten Drehzylinder sowie als weiteren Beschlagteilen (206, 207) ausgebildeten Türaufnahmen ausgebildet ist.

2. Beschlag nach Anspruch 1, **dadurch gekennzeichnet, dass** das erste Beschlagteil (104) ortsfest an einem Möbel- oder Haushaltsgeräteteil (101) des Möbels (100) oder Haushaltsgerätes und das weitere Beschlagteil (106) an einem dazu bewegbaren Möbel- oder Haushaltsgeräteteil festlegbar sind.

3. Beschlag nach Anspruch 2, **dadurch gekennzeichnet, dass** das mechanische Übertragungsmittel (110, 113) mittelbar oder unmittelbar mit dem ersten Beschlagteil (104) und dem weiteren Beschlagteil (106) verbunden ist.

4. Beschlag nach Anspruch 3, **dadurch gekennzeichnet, dass** die Anschlussbauteile (108, 109) an den das mechanische Übertragungsmittel (110, 113) mechanisch an den Beschlagteilen (104, 105, 106) fixierenden Befestigungsstellen angeordnet sind.

5. Beschlag nach Anspruch 3, **dadurch gekennzeichnet, dass** zwischen dem ersten Beschlagteil (104) oder dem weiteren Beschlagteil (106) und dem mechanischen Übertragungsmittel (110, 113) mindestens ein Isolierstück (112) angeordnet ist.

6. Beschlag nach einem der vorstehenden Ansprüche, **dadurch gekennzeichnet, dass** das mechanische Übertragungsmittel (110, 113) als Seil, Draht, Kabel, mehradriges Kabel oder dergleichen ausgebildet ist.

7. Beschlag nach einem der vorstehenden Ansprüche, **dadurch gekennzeichnet, dass** das mechanische Übertragungsmittel (110, 113) an eine Gleichspannungsquelle oder an eine Wechselspannungsquelle anschließbar ist.

8. Beschlag nach einem der vorstehenden Ansprüche, **dadurch gekennzeichnet, dass** das mechanische Übertragungsmittel (110, 113) dazu eingerichtet ist, elektrische Informationen zu übertragen.

9. Beschlag nach einem der vorstehenden Ansprüche, **dadurch gekennzeichnet, dass** der Beschlag zwei elektrisch voneinander getrennte mechanische Übertragungsmittel (110, 113) aufweist.

10. Beschlag nach Anspruch 9, **dadurch gekennzeichnet, dass** jedes der elektrisch voneinander getrennten mechanischen Übertragungsmittel (110, 113) mit Strom beaufschlagt werden kann.

11. Möbel oder Haushaltsgerät, insbesondere Kühl- oder Geschirrspülgerät oder Backofen, aufweisend mindestens ein relativ zu einem Korpus (101) des Möbel oder Haushaltsgerätes über mindestens einen Beschlag (103) bewegbar gelagertes Möbel- oder Haushaltsgeräteteil, **dadurch gekennzeichnet, dass** der Beschlag (103) gemäß einem der vorstehenden Ansprüche ausgebildet ist.

12. Möbel (200, 300) oder Haushaltsgerät, insbesondere Kühl- oder Geschirrspülgerät oder Backofen, aufweisend
- mindestens zwei relativ zu einem Korpus (201, 301) des Möbel (200, 300) oder Haushaltsgerätes über jeweils mindestens einen Beschlag bewegbar gelagerte Möbel- oder Haushaltsgeräteteile (202, 203, 302, 303),
- wobei jeder der Beschläge ein am Korpus (201, 301) festgelegtes erstes Beschlagbauteil (204, 205, 304, 305) und ein am Möbel- oder Haushaltsgeräteteil (202, 203, 302, 303) festgelegtes zweites Beschlagbauteil (206, 207, 306, 307) aufweist,
- mindestens ein mechanisches Übertragungsmittel (208, 211, 308, 311) zur synchronisierten Bewegung der am Möbel- oder Haushaltsgeräteteil festgelegten zweiten Beschlagbauteile (206, 207, 306, 307)
wobei das mechanische Übertragungsmittel (208, 211, 308, 311) zusätzlich zur Übertragung elektrischer Energie zwischen einem ersten elektrischen Anschlussbauteil (108), das am dem ersten Beschlagteil (204, 205, 304, 305) angeordnet ist, und einem zweiten elektrischen Anschlussbauteil (109), das an dem bewegbaren weiteren Beschlagteil (206, 207, 306, 307) angeordnet ist, eingerichtet ist und über wenigstens eine als elektrisch leitendes Bauteil oder als elektrisch nichtleitendes Bauteil ausgebildete Richtungsumlenkung (214, 215, 216, 217, 314, 315, 313, 317) geführt ist, **dadurch gekennzeichnet, dass** der Beschlag als Schiebetürbeschlag mit einer als erstem Beschlagteil (304, 305) ausgebildeten Laufschiene sowie als weiteren Beschlagteilen (306, 307) ausgebildeten Laufteilen oder dass der Beschlag als Drehtürbeschlag mit einem als erstem Beschlagteil (204, 205) ausgebildeten Drehzylinder sowie als weiteren Beschlagteilen (206, 207) ausgebildeten Türaufnahmen ausgebildet ist.

## Claims

1. A fitting (103) of a piece of furniture (100) or domestic appliance, in particular a refrigerator or dishwasher or oven, for connecting two furniture or domestic appliance parts movable relative to one another, having a first fitting part (104) and at least one movable further fitting part (105, 106), and also at least one mechanical transmission means (110, 113), which consists at least partially of an electrically conductive material, for moving the at least one further fitting part (105, 106), which is movable in relation to the first fitting part (104), and/or for synchronizing the movement of two movable fitting parts (105, 106), wherein a first electrical connecting part (108) is arranged on the first fitting part (104) and a second electrical connecting part (109) is arranged on the movable further fitting part (105, 106), wherein the mechanical transmission means (110, 113) is additionally configured to transmit electrical energy between the first electrical connecting part (108) and the second electrical connecting part (109) and is guided via at least one redirection unit (107) designed as an electrically conductive part or as an electrically nonconductive part, **characterized in that** the fitting is designed as a pullout guide having a guide rail designed as the first fitting part (104) and a slide rail and a middle rail, which connects the guide rail to the slide rail, designed as the further fitting parts (105, 106), or the fitting is designed as a sliding door fitting having a slide rail designed as the first fitting part (304, 305) and slide parts designed as further fitting parts (306, 307), or the fitting is designed as a rotating door fitting having a rotary cylinder designed as the first fitting part (204, 205) and door receptacles designed as further fitting parts (206, 207).

2. The fitting according to Claim 1, **characterized in that** the first fitting part (104) is fixable in place on a furniture or domestic appliance part (101) of the piece of furniture (100) or domestic appliance and the further fitting part (106) is fixable on a furniture or domestic appliance part movable in relation thereto.

3. The fitting according to Claim 2, **characterized in that** the mechanical transmission means (110, 113) is connected indirectly or directly to the first fitting part (104) and the further fitting part (106).

4. The fitting according to Claim 3, **characterized in that** the connecting parts (108, 109) are arranged on the fastening points, which mechanically fix the mechanical transmission means (110, 113) on the fitting parts (104, 105, 106).

5. The fitting according to Claim 3, **characterized in that** at least one insulating piece (112) is arranged between the first fitting part (104) or the further fitting part (106) and the mechanical transmission means (110, 113).

6. The fitting according to any one of the preceding claims, **characterized in that** the mechanical transmission means (110, 113) is designed as a wire cable, wire, cable, multicore cable, or the like.

7. The fitting according to any one of the preceding claims, **characterized in that** the mechanical transmission means (110, 113) is connectable to a DC voltage source or an AC voltage source.

8. The fitting according to any one of the preceding claims, **characterized in that** the mechanical transmission means (110, 113) is configured to transmit items of electrical information.

9. The fitting according to any one of the preceding claims, **characterized in that** the fitting has two mechanical transmission means (110, 113), which are electrically separated from one another.

10. The fitting according to Claim 9, **characterized in that** current can be applied to each of the mechanical transmission means (110, 113), which are electrically separated from one another.

11. A piece of furniture or domestic appliance, in particular a refrigerator or dishwasher or oven, having at least one furniture or domestic appliance part mounted so it is movable in relation to a body (101) of the piece of furniture or domestic appliance via at least one fitting (103), **characterized in that** the fitting (103) is designed according to one of the preceding claims.

12. A piece of furniture (200, 300) or domestic appliance, in particular a refrigerator or dishwasher or oven, having
- at least two furniture or domestic appliance parts (202, 203, 302, 303), which are each mounted so they are movable in relation to a body (201, 301) of the piece of furniture (200, 300) or domestic appliance via at least one fitting,
- wherein each of the fittings has a first fitting part (204, 205, 304, 305) fixed on the body (201, 301) and a second fitting part (206, 207, 306, 307) fixed on the furniture or domestic appliance part (202, 203, 302, 303),
- at least one mechanical transmission means (208, 211, 308, 311) for the synchronized movement of the second fitting parts (206, 207, 306, 307) fixed on the furniture or domestic appliance part,
wherein the mechanical transmission means (208, 211, 308, 311) is additionally configured for transmitting electrical energy between a first electrical connecting part (108), which is arranged on the first fitting part (204, 205, 304, 305) and a second electrical connecting part (109), which is arranged on the movable further fitting part (206, 207, 306, 307) and is guided via at least one redirection unit (214, 215, 216, 217, 314, 315, 313, 317) designed as an electrically conductive part or as an electrically nonconductive part, **characterized in that** the fitting is designed as a sliding door fitting having a slide rail designed as the first fitting part (304, 305) and slide parts designed as further fitting parts (306, 307), or the fitting is designed as a rotating door fitting having a rotary cylinder designed as the first fitting part (204, 205) and door receptacles designed as further fitting parts (206, 207).

## Revendications

1. Ferrure (103) d'un meuble (100) ou d'un appareil ménager, en particulier d'un réfrigérateur ou d'une machine à laver la vaisselle ou d'un four de cuisson, pour l'assemblage de deux parties de meuble ou d'appareil ménager mobiles l'une par rapport à l'autre, présentant au moins une première partie de ferrure (104) et au moins une autre partie de ferrure mobile (105, 106) ainsi qu'au moins un moyen de transmission mécanique (110, 113) composé au moins en partie d'un matériau conducteur électrique et destiné à déplacer l'au moins une autre partie de ferrure (105, 106) mobile par rapport à la première partie de ferrure (104) et/ou à synchroniser le mouvement de deux parties de ferrure mobiles (105, 106), la première partie de ferrure (104) portant un premier composant de connexion électrique (108) et l'autre ferrure mobile (105, 106) un deuxième composant de connexion électrique (109), le moyen de transmission mécanique (110, 113) étant en outre configuré pour transmettre de l'énergie électrique entre le premier composant de connexion électrique (108) et le deuxième composant de connexion électrique (109) et étant guidé par-dessus un renvoi (107) conçu comme un composant conducteur électrique ou conçu comme un composant non conducteur électrique, **caractérisée en ce qu'elle** est conçue comme un guide d'extraction avec un rail de guidage conçu comme la première partie de ferrure (104) et un rail de glissement conçu comme d'autres parties de ferrure (105, 106) et un rail intermédiaire reliant le rail de guidage au rail de glissement, ou **en ce que** la ferrure est conçue comme une ferrure de porte coulissante avec un rail de glissement conçu comme une première partie de ferrure (304, 305) et des parties de glissement conçues comme d'autres parties de ferrure (306, 307) ou **en ce que** la ferrure est conçue comme une ferrure de porte pivotante avec un cylindre pivotant conçu comme une première partie de ferrure (204, 205) et des réceptacles dans la porte conçus comme d'autres parties de ferrure (206, 207).

2. Ferrure selon la revendication 1, **caractérisée en ce que** la première partie de ferrure (104) peut être fixée de façon stationnaire sur une partie de meuble ou d'appareil ménager (101) du meuble (100) ou de l'appareil ménager et l'autre partie de ferrure (106) peut être fixée sur une partie de meuble ou d'appareil ménager mobile par rapport à celle-ci.

3. Ferrure selon la revendication 2, **caractérisée en ce que** le moyen de transmission mécanique (110, 113) est assemblé indirectement ou directement à la première partie de ferrure (104) et à l'autre partie de ferrure (106).

4. Ferrure selon la revendication 3, **caractérisée en ce que** les composants de connexion (108, 109) sont disposés en des points de fixation qui fixent mécaniquement les moyens de transmission mécanique (110, 113) sur les parties de ferrure (104, 105, 106).

5. Ferrure selon la revendication 3, **caractérisée en ce qu'au** moins une pièce isolante (112) est disposée entre la première partie de ferrure (104) ou l'autre partie de ferrure (106) et le moyen de transmission mécanique (110, 113).

6. Ferrure selon l'une des revendications précédentes, **caractérisée en ce que** le moyen de transmission mécanique (110, 113) est conçu comme une corde, un fil métallique, un câble, un câble à plusieurs conducteurs ou similaire.

7. Ferrure selon l'une des revendications précédentes, **caractérisée en ce que** le moyen de transmission mécanique (110, 113) peut être raccordé à une source de courant continu ou à une source de courant alternatif.

8. Ferrure selon l'une des revendications précédentes, **caractérisée en ce que** le moyen de transmission mécanique (110, 113) est configuré pour transmettre des informations électriques.

9. Ferrure selon l'une des revendications précédentes, **caractérisée en ce qu'elle** comporte deux moyens de transmission mécaniques (110, 113) séparés électriquement l'un de l'autre.

10. Ferrure selon la revendication 9, **caractérisée en ce que** du courant peut être amené à chacun des moyens de transmission mécaniques (110, 113) séparés électriquement l'un de l'autre.

11. Meuble ou appareil ménager, en particulier réfrigérateur ou machine à laver la vaisselle ou four de cuisson, présentant au moins une partie de meuble ou d'appareil ménager supportée de façon mobile par l'intermédiaire d'au moins une ferrure (103) par rapport à un corps (101) du meuble ou de l'appareil ménager, **caractérisé en ce que** la ferrure (103) est conçue selon l'une des revendications précédentes.

12. Meuble (200, 300) ou appareil ménager, en particulier réfrigérateur ou machine à laver la vaisselle ou four de cuisson présentant
- au moins deux parties de meuble ou d'appareil ménager (202, 203, 302, 303) supportées de façon mobile par l'intermédiaire chacune d'au moins une ferrure par rapport à un corps (201, 301) du meuble (200, 300) ou de l'appareil ménager,
- chacune des ferrures présentant une première partie de ferrure (204, 205, 304, 305) fixée au corps (201, 301) et une deuxième partie de ferrure (206, 207, 306, 307) fixée à la partie de meuble ou d'appareil ménager (202, 203, 302, 303),
- au moins un moyen de transmission mécanique (208, 211, 308, 311) pour le mouvement synchronisé des deuxièmes parties de ferrure (206, 207, 306, 307) fixées à la partie de meuble ou d'appareil ménager,
le moyen de transmission mécanique (208, 211, 308, 311) étant en outre configuré pour transmettre de l'énergie électrique entre un premier composant de connexion électrique (108) disposé sur la première partie de ferrure (204, 205, 304, 305) et un deuxième composant de connexion électrique (109) disposé sur l'autre partie de ferrure mobile (206, 207, 306, 307) et guidé par-dessus un renvoi (214, 215, 216, 217, 314, 315, 313, 317) conçu comme un composant conducteur électrique ou conçu comme un composant non conducteur électrique, **caractérisé en ce que** la ferrure est conçue comme une ferrure de porte coulissante avec un rail de glissement conçu comme la première partie de ferrure (304, 305) et des parties de glissement conçues comme les autres parties de ferrure (306, 307) ou **en ce que** la ferrure est conçue comme une ferrure de porte pivotante avec un cylindre de pivotement conçu comme la première partie de ferrure (204, 205) et des réceptacles de porte conçus comme les autres parties de ferrure (206, 207).
